# EUROPÄISCHE PATENTANMELDUNG

(11) **EP 3 188 297 A1**
(43) Veröffentlichungstag der Anmeldung: **05.07.2017**
(21) Anmeldenummer: 16201870.9
(22) Anmeldetag: 02.12.2016
(51) Int. Cl.: H01M 8/243, H01M 8/00, H01M 8/0612, H01M 8/0662, H01M 8/124

(54) **BRENNSTOFFZELLENVORRICHTUNG**

(30) Priorität: 28.12.2015 DE 102015226751
(71) Anmelder: ROBERT BOSCH GMBH, 70442 Stuttgart (DE)
(72) Erfinder: Heeren, Imke, 70199 Stuttgart (DE); Haeffelin, Andreas, 71665 Vaihingen (DE)

(57) **Zusammenfassung**

Die Erfindung geht aus von einer Brennstoffzellenvorrichtung, insbesondere einer tubularen Brennstoffzellenvorrichtung, mit zumindest einem Brennstoffzellentubus (12) und zumindest einer wenigstens teilweise in dem Brennstoffzellentubus (12) angeordneten Zuströmlanze (14).

Es wird vorgeschlagen, dass die Brennstoffzellenvorrichtung zumindest einen Anodengasprozessor (16) aufweist, welcher zumindest teilweise in der Zuströmlanze (14) integriert ist.

## Beschreibung

### Stand der Technik

Es ist bereits eine Brennstoffzellenvorrichtung, insbesondere eine tubulare Brennstoffzellenvorrichtung, mit zumindest einem Brennstoffzellentubus und zumindest einer wenigstens teilweise in dem Brennstoffzellentubus angeordnete Zuströmlanze, vorgeschlagen worden.

### Offenbarung der Erfindung

Die Erfindung geht aus von einer Brennstoffzellenvorrichtung, insbesondere tubulare Brennstoffzellenvorrichtung, mit zumindest einem Brennstoffzellentubus und zumindest einer wenigstens teilweise in dem Brennstoffzellentubus angeordnete Zuströmlanze.

Es wird vorgeschlagen, dass die Brennstoffzellenvorrichtung zumindest einen Anodengasprozessor aufweist, welcher zumindest teilweise in der Zuströmlanze integriert ist. Vorzugsweise ist der Anodengasprozessor vollständig in die Zuströmlanze integriert.

Unter einer "Brennstoffzellenvorrichtung" soll in diesem Zusammenhang insbesondere eine Vorrichtung verstanden werden, welche dazu vorgesehen ist, zumindest eine chemische Reaktionsenergie zumindest eines, insbesondere kontinuierlich zugeführten, Brenngases, insbesondere Wasserstoff und/oder Kohlenstoffmonoxid, und zumindest eines Oxidationsmittels, insbesondere Sauerstoff, insbesondere in elektrische und/oder thermische Energie, umzuwandeln. Die zumindest eine Brennstoffzellenvorrichtung ist vorzugsweise als Festoxid-Brennstoffzelle (SOFC) ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Brennstoffzellentubus" soll in diesem Zusammenhang insbesondere ein zumindest im Wesentlichen röhrenförmiger Grundkörper verstanden werden. Insbesondere bildet der Brennstoffzellentubus zumindest einen Teil einer äußeren Hülle der Brennstoffzellenvorrichtung. Der Brennstoffzellentubus ist insbesondere an einer Endseite geschlossen ausgeführt. Insbesondere weist der Brennstoffzellentubus zumindest einen gasdurchlässig ausgebildeten Teilbereich auf. Insbesondere ist der Brennstoffzellentubus zumindest im Wesentlichen von einem keramischen Material gebildet. Der Brennstoffzellentubus besteht insbesondere mit einem Massenanteil von zumindest 75 %, vorteilhaft von zumindest 85 % und vorzugsweise von zumindest 95 % aus dem keramischen Material. Unter einem "keramischen Material" soll in diesem Zusammenhang insbesondere ein anorganisches, nichtmetallisches Material verstanden werden. Insbesondere kann das zumindest eine keramische Material zumindest teilweise kristallin sein. Unter "nichtmetallisch" soll in diesem Zusammenhang insbesondere verstanden werden, dass das zumindest eine keramische Material zumindest weitestgehend frei von insbesondere auf metallischen Bindungen beruhenden, metallischen Eigenschaften ist, jedoch Metallverbindungen, wie beispielsweise Metalloxide und/oder -Silikate, umfassen kann. Das keramische Material kann insbesondere zumindest im Wesentlichen von einer Forsteritkeramik gebildet sein.

Insbesondere weist die tubulare Brennstoffzellenvorrichtung zumindest eine Funktionsschicht auf, welche auf den wenigstens einen zumindest teilweise gasdurchlässig ausgebildeten Teilbereich aufgebracht ist. Unter einer "Funktionsschicht" soll in diesem Zusammenhang insbesondere eine Schicht verstanden werden, welche insbesondere zumindest eine Anode und zumindest eine Kathode sowie zumindest ein zwischen der zumindest einen Anode und der zumindest einen Kathode angeordnetes Elektrolyt aufweist. Insbesondere kann die zumindest eine Funktionsschicht auf einer Innenseite und/oder einer Außenseite des Brennstoffzellentubus angeordnet sein. Vorzugsweise ist die zumindest eine Funktionsschicht vollständig auf einer Innenseite des Brennstoffzellentubus angeordnet.

Unter einer "Zuströmlanze" soll in diesem Zusammenhang insbesondere ein zumindest im Wesentlichen röhrenförmiges Element verstanden werden, welches dazu vorgesehen ist, zumindest in einem montierten Zustand zumindest teilweise in den Brennstoffzellentubus hineinzuragen. Insbesondere begrenzen der Brennstoffzellentubus und die Zuströmlanze in einem montierten Zustand zumindest einen Gasraum zumindest im Wesentlichen allseitig. Insbesondere ist die Zuströmlanze dazu vorgesehen, in zumindest einem Betriebszustand ein Brenngas in den Brennstoffzellentubus zu leiten.

Unter einem "Anodengasprozessor" soll in diesem Zusammenhang insbesondere eine Einheit verstanden werden, welche dazu vorgesehen ist, insbesondere ein Erdgas vor einer Zuleitung zu einer Anode der Brennstoffzelleneinheit für eine Verwendung innerhalb einer in der Brennstoffzelleneinheit ablaufenden Reaktion aufzubereiten. Insbesondere ist der Anodengasprozessor dazu vorgesehen, insbesondere ein Erdgas und/oder ein Brenngas und/oder ein brenngashaltiges Gasgemisch auf eine Reaktionstemperatur zu erwärmen und/oder das Erdgas in ein Brenngas und/oder ein Brenngasgemisch zu überführen. Unter einem "Erdgas" soll in diesem Zusammenhang insbesondere ein Gas und/oder ein Gasgemisch, insbesondere ein Naturgasgemisch, verstanden werden, welches vorzugsweise zumindest ein Alkan, insbesondere Methan, Ethan, Propan und/oder Butan, umfasst. Ferner kann das Erdgas weitere Bestandteile aufweisen, wie insbesondere Kohlenstoffdioxid und/oder Stickstoff und/oder Sauerstoff und/oder Schwefelverbindungen.

Durch eine derartige Ausgestaltung kann eine gattungsgemäße Brennstoffzellenvorrichtung mit vorteilhaften Betriebseigenschaften bereitgestellt werden. Insbesondere kann durch eine Integration eines Anodengasprozessors in einen freien Raum der Zuströmlanze eine vorteilhafte Bauraumreduzierung erreicht werden.

Ferner wird vorgeschlagen, dass der Anodengasprozessor mehrstufig ausgebildet ist. Insbesondere kann der Anodengasprozessor eine Mehrzahl von insbesondere fluidtechnisch hintereinander angeordneten Prozessorstufen aufweisen. Insbesondere kann der Anodengasprozessor zumindest eine oder mehrere Prozessorstufen aufweisen, welche dazu vorgesehen sind, ein Erdgas zumindest weitgehend zu entschwefeln. Alternativ oder zusätzlich kann der Anodengasprozessor zumindest eine oder mehrere Prozessorstufen aufweisen, welche dazu vorgesehen sind, ein Erdgas zumindest teilweise in ein Brenngas, insbesondere in Wasserstoff, zu überführen. Vorzugsweise umfasst der Anodengasprozessor zumindest eine erste Prozessorstufe, welche dazu vorgesehen ist, ein Erdgas zumindest weitgehend zu entschwefeln, und zumindest eine zweite Prozessorstufe, welche dazu vorgesehen ist, ein Erdgas zumindest teilweise in ein Brenngas zu überführen. Hierdurch kann eine vorteilhafte Funktionalität des Anodengasprozessors erreicht werden.

Des Weiteren wird vorgeschlagen, dass der Anodengasprozessor zumindest eine Entschwefelungseinheit aufweist. Unter einer "Entschwefelungseinheit" soll in diesem Zusammenhang insbesondere eine Einheit verstanden werden, welche dazu vorgesehen ist, vorzugsweise durch zumindest ein physikalisches und/oder chemisches Adsorptionsverfahren und/oder Absorptionsverfahren, einen Volumen- und/oder Molanteil an Schwefelverbindungen in dem Erdgas insbesondere unter einen festgelegten Grenzwert zu senken und vorzugsweise zumindest im Wesentlichen aus dem Erdgas zu entfernen. Hierdurch kann eine vorteilhafte Entschwefelung eines Erdgases erreicht werden, wodurch Schädigungen der Brennstoffzellenvorrichtung durch Schwefelkomponenten zumindest weitgehend vermieden werden können.

Zudem wird vorgeschlagen, dass der Anodengasprozessor zumindest eine Reformereinheit aufweist. Unter einer "Reformereinheit" soll in diesem Zusammenhang insbesondere eine chemisch-technische Einheit zu zumindest einer, insbesondere teilweisen oder vollständigen, Aufbereitung des Erdgases, insbesondere durch eine Dampfreformierung und/oder durch eine partielle Oxidation und/oder durch eine autotherme Reformierung, insbesondere zur Gewinnung zumindest eines Brenngases und/oder eines brenngashaltigen Gasgemischs, verstanden werden. Hierdurch kann eine vorteilhafte Gewinnung eines Brenngases erreicht werden.

Ferner wird vorgeschlagen, dass der Anodengasprozessor zumindest teilweise als Schüttkatalysator ausgebildet ist. Vorzugsweise ist der Anodengasprozessor vollständig als Schüttkatalysator ausgebildet. Insbesondere sind eine Entschwefelungseinheit und eine Reformereinheit des Anodengasprozessors jeweils als Schüttkatalysatoren ausgebildet. Unter einem "Schüttkatalysator" soll insbesondere ein Katalysator verstanden werden, bei welchem zumindest ein katalytisches Element auf Pellets, Granulat oder Kugeln aus Keramik oder Metall aufgebracht ist. Hierdurch kann eine vorteilhaft einfache Integration des Anodengasprozessors in die Zuströmlanze ermöglicht werden.

Des Weiteren wird vorgeschlagen, dass die Zuströmlanze eine gelochte zumindest im Wesentlichen kugelsegmentförmige Abschlusskappe aufweist, welche in einem Kopfbereich der Zuströmlanze angeordnet ist. Zudem weist die Zuströmlanze vorzugsweise eine gelochte Deckplatte auf, welche in einem Fußbereich der Zuströmlanze angeordnet ist. Hierdurch kann das insbesondere pelletförmige Katalysatormaterial des Anodengasprozessors vorteilhaft einfach, sicher und/oder dauerhaft in die Zuströmlanze integriert werden.

Zudem wird ein Brennstoffzellenstack mit zumindest zwei erfindungsgemäßen Brennstoffzellenvorrichtungen vorgeschlagen. Insbesondere sind die Brennstoffzellenvorrichtungen elektrisch und/oder fluidtechnisch verschaltet. Hierdurch kann auf einfache Weise ein Brennstoffzellenstack realisiert werden.

Ferner wird ein Verfahren zur Herstellung einer Brennstoffzellenvorrichtung, insbesondere einer tubularen Brennstoffzellenvorrichtung mit zumindest einem Brennstoffzellentubus und zumindest einer wenigstens teilweise in dem Brennstoffzellentubus angeordnete Zuströmlanze, vorgeschlagen, bei welchem ein Andodengasprozessor zumindest teilweise in die Zuströmlanze integriert wird. Insbesondere wird der Anodengasprozessor als Schüttkatalysator in die Zuströmlanze integriert.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen. Durch eine Integration eines Anodengasprozessors in einen freien Raum der Zuströmlanze kann insbesondere eine vorteilhafte Bauraumreduzierung erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittdarstellung einer tubularen Brennstoffzellenvorrichtung mit integriertem Anodengasprozessor und

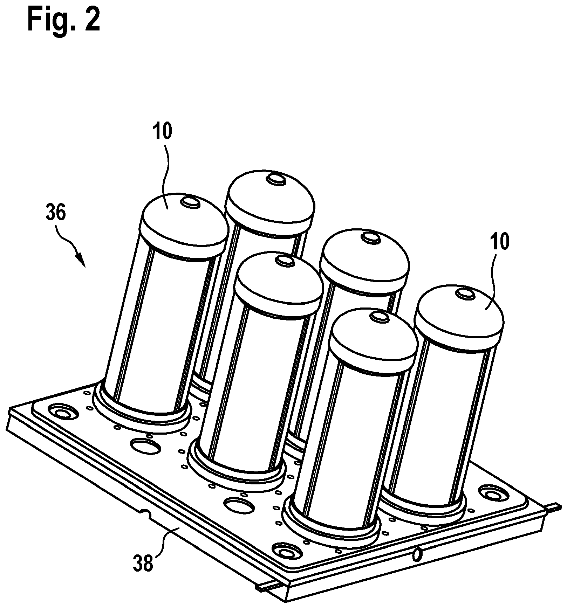

- Fig. 2: einen Brennstoffzellenstack mit sechs Brennstoffzellenvorrichtungen gemäß Figur 1.

### Beschreibung des Ausführungsbeispiels

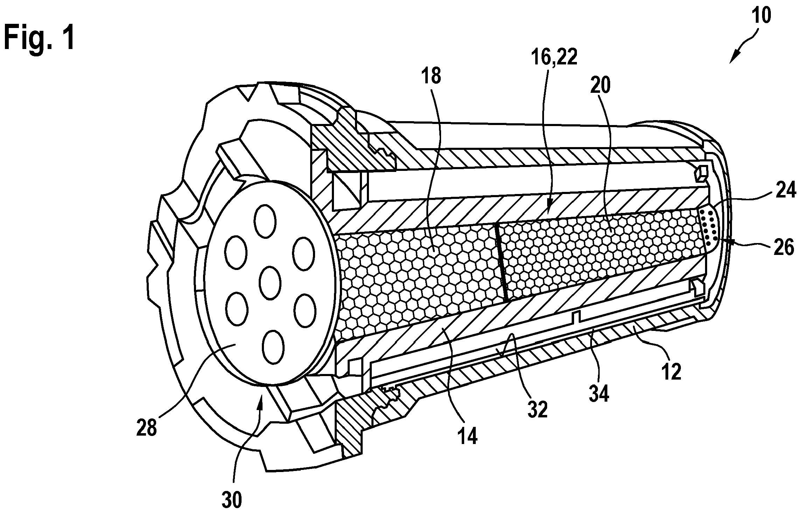

Figur 1 zeigt eine Schnittdarstellung einer Brennstoffzellenvorrichtung 10, welche als tubulare Brennstoffzellenvorrichtung ausgebildet ist. Die Brennstoffzellenvorrichtung 10 umfasst einen Brennstoffzellentubus 12 und eine in dem Brennstoffzellentubus 12 angeordnete Zuströmlanze 14. Auf eine Innenseite 32 des Brennstoffzellentubus 12 ist eine hier lediglich angedeutet dargestellte Funktionsschicht 34 aufgebracht. Die Funktionsschicht 34 weist, hier nicht im Detail dargestellt, eine Anode, eine Kathode und einen zwischen der Anode und der Kathode angeordneten Elektrolyt auf. Ferner weist die Brennstoffzellenvorrichtung 10 einen Anodengasprozessor 16 auf, welcher in der Zuströmlanze 14 integriert ist. Der Anodengasprozessor 16 ist vollständig in der Zuströmlanze 14 integriert. Alternativ ist es ebenso denkbar, einen Anodengasprozessor lediglich teilweise in eine Zuströmlanze zu integrieren.

Der Anodengasprozessor 16 ist mehrstufig ausgebildet. Der Anodengasprozessor 16 ist beispielhaft zweistufig ausgebildet. Der Anodengasprozessor 16 weist eine Entschwefelungseinheit 18 auf. Die Entschwefelungseinheit 18 kann insbesondere als Hydrodesulfierungseinheit oder als Trockenentschwefelungseinheit ausgebildet sein. Zudem weist der Anodengasprozessor 16 eine Reformereinheit 20 auf. Der Anodengasprozessor 16 ist als Schüttkatalysator 22 ausgebildet ist. Insbesondere können sowohl die Entschwefelungseinheit 18 als auch die Reformereinheit 20 als Pelletschüttungen in die Zuströmlanze 14 eingebracht sein.

Die Zuströmlanze 14 weist eine gelochte kugelsegmentförmige Abschlusskappe 24 auf, welche in einem Kopfbereich 26 der Zuströmlanze 14 angeordnet ist. Zudem weist die die Zuströmlanze 14 eine gelochte Deckplatte 28 auf, welche in einem Fußbereich 30 der Zuströmlanze 14 angeordnet ist. Die Deckplatte 28 wird nach einem Einbringen des Anodengasprozessors 16, beispielsweise mittels eines Glaslots, fest mit der Zuströmlanze 14 verbunden. Während eines Betriebs der Brennstoffzellenvorrichtung 10 wird über die Zuströmlanze 14 beispielsweise ein Erdgas in den Brennstoffzellentubus 12 geleitet. Dabei passiert das Erdgas zunächst die Entschwefelungseinheit 18 und daraufhin die Reformereinheit 20 des Anodengasprozessors 16.

Figur 4 zeigt eine perspektivische Darstellung eines beispielhaften Brennstoffzellenstacks 36 mit einer rechteckigen Trägerplatte 38 und sechs mit der Trägerplatte 38 verbundenen tubularen Brennstoffzellenvorrichtungen 10 in einem montierten Zustand..

## Patentansprüche

1. Brennstoffzellenvorrichtung, insbesondere tubulare Brennstoffzellenvorrichtung, mit zumindest einem Brennstoffzellentubus (12) und zumindest einer wenigstens teilweise in dem Brennstoffzellentubus (12) angeordneten Zuströmlanze (14), **gekennzeichnet durch** zumindest einen Anodengasprozessor (16), welcher zumindest teilweise in der Zuströmlanze (14) integriert ist.

2. Brennstoffzellenvorrichtung nach Anspruch 1, **dadurch gekennzeichnet, dass** der Anodengasprozessor (16) vollständig in der Zuströmlanze (14) integriert ist.

3. Brennstoffzellenvorrichtung nach Anspruch 1 oder 2, **dadurch gekennzeichnet, dass** der Anodengasprozessor (16) mehrstufig ausgebildet ist.

4. Brennstoffzellenvorrichtung nach einem der vorhergehenden Ansprüche, **dadurch gekennzeichnet, dass** der Anodengasprozessor (16) zumindest eine Entschwefelungseinheit (18) aufweist.

5. Brennstoffzellenvorrichtung nach einem der vorhergehenden Ansprüche, **dadurch gekennzeichnet, dass** der Anodengasprozessor (16) zumindest eine Reformereinheit (20) aufweist.

6. Brennstoffzellenvorrichtung nach einem der vorhergehenden Ansprüche, **dadurch gekennzeichnet, dass** der Anodengasprozessor (16) zumindest teilweise als Schüttkatalysator (22) ausgebildet ist.

7. Brennstoffzellenvorrichtung nach einem der vorhergehenden Ansprüche, **dadurch gekennzeichnet, dass** die Zuströmlanze (14) eine gelochte zumindest im Wesentlichen kugelsegmentförmige Abschlusskappe (24) aufweist, welche in einem Kopfbereich (26) der Zuströmlanze (14) angeordnet ist.

8. Brennstoffzellenvorrichtung nach einem der vorhergehenden Ansprüche, **dadurch gekennzeichnet, dass** die Zuströmlanze (14) eine gelochte Deckplatte (28) aufweist, welche in einem Fußbereich (30) der Zuströmlanze (14) angeordnet ist.

9. Brennstoffzellenstack mit zumindest zwei Brennstoffzellenvorrichtungen (10) nach einem der vorhergehenden Ansprüche.

10. Verfahren zur Herstellung einer Brennstoffzellenvorrichtung (10), insbesondere einer tubulare Brennstoffzellenvorrichtung, insbesondere nach einem der Ansprüche 1 bis 8, mit zumindest einem Brennstoffzellentubus (12) und zumindest einer wenigstens teilweise in dem Brennstoffzellentubus (12) angeordneten Zuströmlanze (14), **dadurch gekennzeichnet, dass** ein Anodengasprozessor (16) zumindest teilweise in die Zuströmlanze (14) integriert wird.
